# FASCICULE DE BREVET EUROPEEN

(11) **EP 1 218 637 B1**
(45) Date de publication et mention de la délivrance du brevet: **16.03.2005**
(21) Numéro de dépôt: 01972223.0
(22) Date de dépôt: 27.09.2001
(51) Int. Cl.: F02N 11/08

(54) **DISPOSITIF DE COMMANDE D'UN DEMARREUR NOTAMMENT DE VEHICULE AUTOMOBILE**
STEUERVORRICHTUNG EINES ANLASSERS, INSBESONDERE FÜR EIN KRAFTFAHRZEUG
AUTOMOBILE STARTER CONTROL DEVICE IN PARTICULAR FOR MOTOR VEHICLE

(30) Priorité: 28.09.2000 FR 0012626
(43) Date de publication de la demande: 03.07.2002
(73) Titulaire: VALEO EQUIPEMENTS ELECTRIQUES MOTEUR, 94017 Creteil (FR)
(72) Inventeur: GOGUET, Olivier, F-94000 Créteil (FR); MAILLET, Régis, F-38680 Saint Alban de Roche (FR); OUVRY, Eric, F-69600 Oullins (FR)
(74) Mandataire: Gamonal, Didier
(86) Numéro de dépôt international: PCT/FR2001/002998
(87) Numéro de publication internationale: WO 2002/027180

(56) Documents cités:
- EP-A- 1 037 356
- FR-A- 2 679 717
- FR-A- 2 760 909

## Description

La présente invention est relative aux dispositifs de commande de démarreurs notamment de véhicules automobiles.

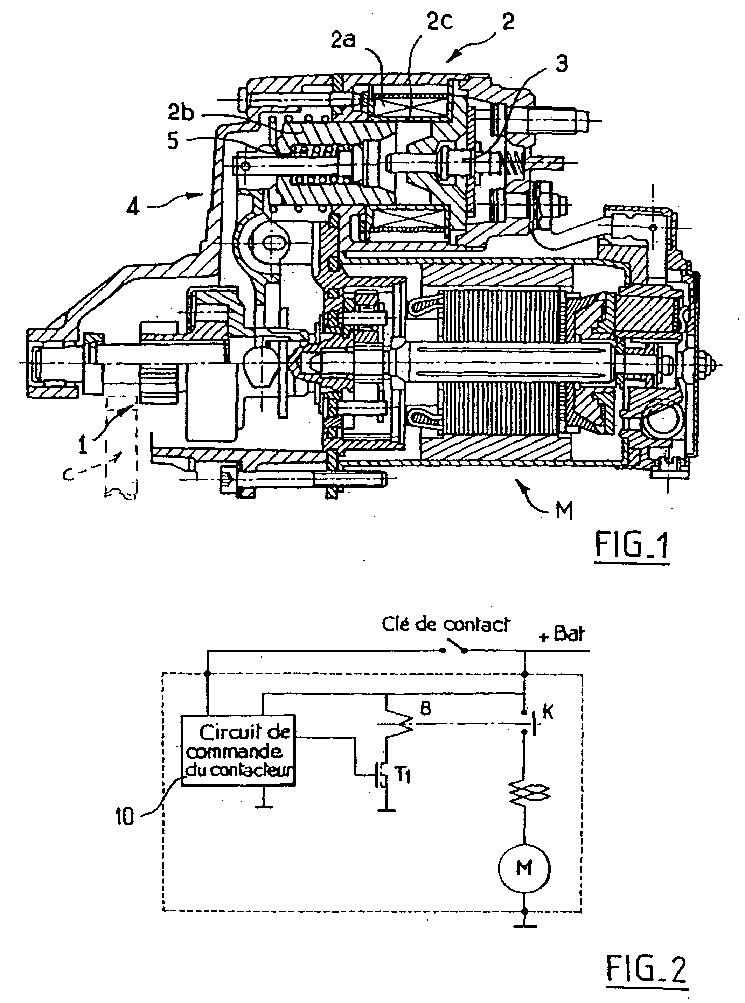

Tel qu'illustré sur la figure 1, un démarreur de véhicule automobile comporte classiquement un contacteur 2 ainsi qu'un moteur électrique M dont l'arbre de sortie porte un pignon 1. Le pignon 1 est destiné à coopérer avec l'engrenage de la couronne de démarrage C du moteur thermique d'un véhicule automobile. Il est coulissant sur l'arbre du moteur M entre une position où il est désengagé par rapport à ladite couronne de démarrage et une position où il engrène avec celle-ci.

Le contacteur 2 s'étend parallèlement au moteur électrique M au-dessus de celui-ci et comporte un bobinage 2a et un noyau plongeur 2b.

Le bobinage 2a est supporté par un support servant de coussinet au noyau mobile.

Il assure la commande de l'alimentation du moteur électrique M par déplacement d'un contact mobile 3 entre une position d'ouverture et une position de fermeture, ledit contact 3 étant poussé par ledit noyau plongeur 2b mobile axialement par rapport au moteur électrique M lorsque le bobinage 2a est activé.

Le contacteur 2 commande également le déplacement du pignon 1. Son noyau plongeur 2b est pour cela relié au pignon 1 par des moyens mécaniques référencés par 4 dans leur ensemble.

Ces moyens mécaniques comportent une fourchette attelée à son extrémité supérieure au noyau plongeur 2b et à son extrémité inférieure avec un lanceur auquel appartient le pignon 1.

Ce lanceur comporte une roue libre intercalée axialement entre un moyeu et le pignon 1. Le moyeu est doté intérieurement de cannelures hélicoïdales en prise de manière complémentaire avec des dentures hélicoïdales externes portées localement par l'arbre de sortie du moteur électrique M.

La fourchette est montée de manière pivotante entre ses deux extrémités sur un carter contenant intérieurement les moyens mécaniques 4 et portant le moteur M et le contacteur 2. Le lanceur avec son pignon 1 est animé d'un mouvement hélicoïdal lorsqu'il est déplacé par la fourchette pour venir en prise avec la couronne de démarrage.

Ceci est réalisé en alimentant le bobinage 2a suite à un actionnement de la clef de contact ce qui permet de fermer un interrupteur de commande et de mettre en mouvement le noyau plongeur 2b attiré alors en direction d'un noyau fixe monté à l'extrémité du support 2c du bobinage 2a. Ce support a une section en forme de U pour loger le bobinage 2a et comporte donc un fond constituant un coussinet 2C. Le noyau 2b est donc destiné à se déplacer entre une position de repos et une position de contactage dans laquelle il est en appui sur le noyau fixe, cette position de fermeture du circuit magnétique ayant lieu après fermeture du contact mobile 3 et donc du circuit électrique.

Les moyens mécaniques comportent également un ressort de rappel monté autour du noyau 2b pour rappeler celui-ci en position de repos, un ressort de coupure associé au contact mobile 3 pour rappeler celui-ci en position d'ouverture et un ressort 5, dit ressort dents contre dents, logé à l'intérieur du noyau 2b et en prise avec une première tige reliée par un axe à l'extrémité supérieure de la fourchette pour attelage de celle-ci au noyau 2b. Ce ressort 5 a une plus forte raideur que le ressort de rappel.

La fourchette est donc intercalée à son extrémité supérieure entre le noyau 2b et l'axe. La première tige, montée à l'intérieur d'un trou borgne du noyau 2b, est destinée après une course déterminée à venir en prise avec une deuxième tige solidaire du contact mobile 3 et montée coulissante à l'intérieur du noyau fixe. En position de fermeture le contact 3 coopère avec un contact fixe, sous forme de plots reliés respectivement à la borne positive de la batterie et au moteur électrique M, permettant ainsi l'alimentation du moteur électrique.

Les plots sont solidaires du capot de fermeture du contacteur en matière isolante.

Tous ces éléments sont représentés à la figure 1 et n'ont pas été référencés par simplicité.

De nombreux modes de réalisation d'alimentation électrique du contacteur existent. Ainsi dans le document FR-A-2 679 717, on a proposé d'alimenter électriquement le bobinage du contacteur par un courant pulsé variable généré par un circuit de commande.

En référence à la figure 2, dans ce type de disposition, une bobine B commande à la fois un contact de puissance K et l'avancement d'un pignon non représenté. La bobine B est alimentée par l'intermédiaire d'un transistor T1 en mode impulsions, de type à modulation de largeur d'impulsions ou « Pulse Width Modulation « (PWM), en français, le transistor étant piloté par un micro-contrôleur constituant le circuit de commande.

On augmente progressivement un rapport cyclique des pulsations pour obtenir un courant efficace dans la bobine qui augmente de façon progressive.

Ce procédé vise également à réduire la vitesse d'impact du pignon contre la couronne pour réduire l'usure frontale de celle-ci.

Pour réduire encore cette vitesse d'impact on a proposé dans le document FR 0008293, déposé le 28/06/2000 un dispositif pour la commande de l'alimentation d'une bobine d'entraînement d'un noyau mobile de contacteur de démarreur de véhicule automobile, prévu pour faire varier le courant efficace dans la bobine au cours du déplacement du noyau vers sa position de contactage, dans lequel il est prévu pour mettre en oeuvre au cours de ce déplacement :
- une première phase d'entraînement à courant efficace suffisant pour mettre en mouvement le noyau, puis,
- une seconde phase d'entraînement à courant efficace plus faible.

Durant la deuxième phase, il est prévu de mettre en oeuvre, après un temps déterminé ou prédéterminé, un accroissement continu de l'intensité efficace.

Grâce à disposition le contacteur a une forme simple et un déplacement brutal du noyau, de sa position de repos vers sa position d'activation, est évité.

En effet, après un temps déterminé ou prédéterminé, l'accroissement progressif de l'intensité efficace permet, d'une part, de comprimer progressivement le ressort, dents contre dents 5, et, d'autre part, la fermeture du contacteur pour alimenter le moteur électrique dans le cas accidentel où le contacteur n'aurait pas pu être fermé auparavant.

Ainsi dans le cas accidentel où des forces de frottement anormalement élevées prennent place dans le contacteur, dans les moyens mécaniques ou au niveau de l'arbre du moteur électrique on assure au-delà d'un temps prédéterminé ou déterminé la fermeture du contacteur.

La solution est donc fiable et permet d'augmenter la durée de vie du démarreur grâce notamment à une réduction des usures.

Pour augmenter encore la durée de vie on prévoit également de doter le circuit de commande de la bobine du démarreur d'un dispositif de protection thermique qui empêche le redémarrage du moteur électrique du démarreur par exemple après plusieurs essais de démarrage du moteur thermique du véhicule automobile et/ou empêche le moteur électrique du démarreur de tourner après une durée déterminée ou prédéterminée. Pour plus de précisions, on se reportera, par exemple, à la demande de brevet français FR 2,751,414.

Il est souhaitable d'activer alors un dispositif d'avertissement pour le conducteur lorsque le dispositif de protection intervient.

La présente invention a pour objet de répondre à ce souhait de manière simple et économique.

Suivant l'invention un dispositif de commande de l'alimentation d'un moteur électrique d'un démarreur, notamment de véhicule automobile, comportant un contact de puissance qui commande l'alimentation du moteur électrique du démarreur, un circuit de commande pour la commande du contact puissance, ainsi qu'un interrupteur de commande entre le circuit de commande et une alimentation à la tension de la batterie est caractérisé en ce qu'il comporte un premier dispositif électronique relié, d'une part, à l'interrupteur de commande et, d'autre part, par une liaison filaire à un deuxième dispositif électronique comprenant le circuit de commande, en ce qu'un dispositif d'avertissement est monté entre l'alimentation à la tension de la batterie et le premier dispositif électronique, et en ce que le deuxième dispositif comporte au moins deux dispositifs reliés au circuit de commande à savoir, d'une part, un dispositif d'information de protection activé par un dispositif de protection du démarreur que comporte le circuit de commande et, d'autre part, un dispositif de signal commande, en sorte que le dispositif d'information de protection est propre à activer par la liaison filaire le premier dispositif électronique pour activer via ce premier dispositif électronique le dispositif d'avertissement lorsque le dispositif de protection est actif, tandis que le dispositif de signal de commande est propre à activer le circuit de commande lorsque le dispositif de protection est inactif.

Grâce à l'invention la liaison filaire travaille dans les deux sens en sorte qu'elle est bidirectionnelle et que la solution est simple et économique.

Les dispositifs de signal de commande et d'information de protection sont reliés entre eux en sorte que le dispositif d'information de protection, lorsqu'il est actif, est propre à inhiber le dispositif de signal de commande.

Suivant une caractéristique le dispositif d'avertissement et l'interrupteur de commande sont montés en parallèle entre la ligne d'alimentation à la batterie et le premier dispositif électronique.

Ainsi dans un mode de réalisation on tire partie de cette disposition pour doter le deuxième dispositif électronique d'un dispositif de maintien de l'information pour maintenir en action le dispositif d'avertissement lorsque l'interrupteur de commande est ouvert et ce tant que le démarreur ne retrouve pas ses conditions normales de fonctionnement avec mise hors service du dispositif de protection du démarreur.

Le dispositif de maintien génère une tension lorsque l'interrupteur de commande est ouvert pour maintenir en activité le dispositif d'avertissement.

Suivant une caractéristique le dispositif de maintien de l'information est relié au circuit de commande dans lequel est intégré le dispositif de protection du démarreur sensible dans un mode de réalisation à la température du démarreur et à une durée déterminée ou prédéterminée de la rotation du moteur électrique du démarreur.

Le premier dispositif électronique est dans une forme de réalisation le dispositif de contrôle du moteur thermique du véhicule automobile placé à l'extérieur du démarreur.

Cette disposition est avantageuse car ce dispositif, appelé aussi module du contrôle moteur, présente un contrôleur au calculateur et un ou des dispositifs d'avertissement. On tire parti de ce module.

D'autres caractéristiques, buts et avantages de l'invention apparaîtront à la lecture de la description détaillée qui va suivre, faite en référence aux figures annexées, sur lesquelles :
- la figure 1 représente un démarreur de véhicule automobile conforme à l'état de la technique ;
- la figure 2 représente un montage d'alimentation d'un contacteur de démarreur conforme à l'état de la technique ;
- la figure 3 est un tracé représentant l'évolution d'un rapport cyclique de tension d'alimentation d'une bobine de contacteur ;
- la figure 4 représente un montage d'alimentation d'un contacteur de démarreur selon l'invention, sans contact de puissance et sans le moteur électrique du démarreur.

Par simplicité les éléments identiques seront affectés dans les figures des mêmes signes de référence.

Ainsi qu'on le sait, comme visible à la figure 2, le moteur électrique M d'un démarreur de moteur thermique d'un véhicule automobile est monté entre la masse et une borne B+ d'alimentation à la tension de la batterie. Le circuit de commande comprend un contact de puissance K monté entre la borne B+ et le moteur électrique M pour commander l'alimentation électrique de ce moteur M.

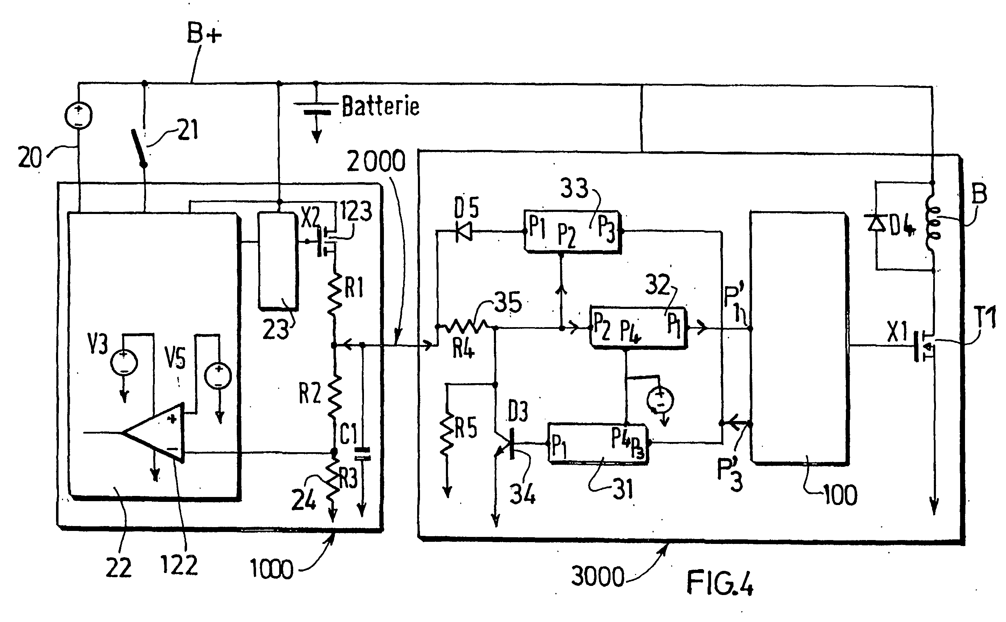

A la figure 4, par simplicité on n'a pas représenté cette partie du circuit de commande.

On voit dans cette figure en 2000 la ligne qui se branche sur l'entrée d'un dispositif électronique de commande 3000 du contact K relié au moteur électrique du démarreur.

La bobine B est reliée à un transistor T1 connecté à la masse.

Dans la figure 4 on voit en B la bobine formée par le bobinage 2a de la figure 1.

La bobine B est adaptée de manière précitée à commander le contact de puissance et est associée à un circuit de commande.

Ici on utilise un dispositif d'alimentation électrique de la bobine B comportant le circuit de commande 3000, dont le montage reste similaire à celui représenté sur la figure 1, et dans lequel on adopte là encore une alimentation du bobinage 2a de la bobine B selon une tension en créneau de type PWM comme décrit dans le document FR00 08293 précité.

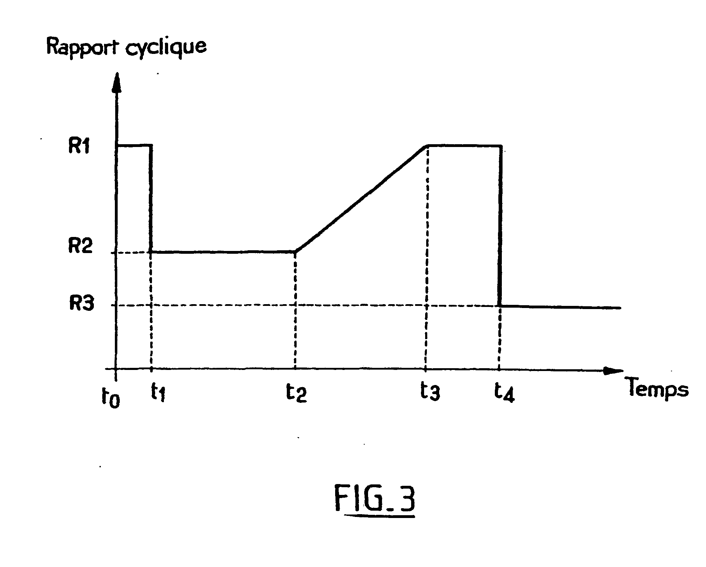

Ainsi on fait varier le rapport cyclique au cours du déplacement du noyau selon l'évolution représenté à la figure 3 et ce après un temps prédéterminé ou déterminé.

Sur ce tracé, on a indiqué en abscisses des instants successifs au cours du déplacement du noyau, de sa position de repos initial (instant T₀) à une position finale (« période d'appel du noyau ») où il se trouve en butée contre le noyau fixe et où il assure le contact, le contact mobile 3 étant alors fermé.

La période d'appel du noyau est décomposée en deux phases principales dont la seconde se décompose en trois sous-phases. On décrira maintenant ces deux phases principales.

Pendant la première phase allant de l'instant t₀ à un instant t₁, on adopte un rapport cyclique R1, voisin ou égal à 100% (le rapport cyclique est le ratio entre la durée de conduction du transistor T₁ et la durée totale d'un cycle). Pendant cette phase, une intensité efficace élevée traverse le bobinage 2a de la bobine B et le noyau 2b est soumis à une force d'attraction suffisante à le décoller de sa position de repos et à le mettre en mouvement. Cette phase est brève, ici de l'ordre de 2 à 10 ms, pour ne produire une force d'attraction élevée sur le noyau que dans le but de décoller celui-ci.

La seconde phase se déroule entre l'instant t₁ et un instant t₃. Dans un premier intervalle de cette seconde phase, le transistor T₁ commande le contacteur selon un rapport cyclique ayant une valeur R2 sensiblement égale à 50%, de sorte que le courant efficace dans la bobine 2a est nettement réduit par rapport à celui obtenu pendant la première phase, juste suffisant pour vaincre les forces de frottement F résiduelles après le décollage du noyau 2b. Pendant cet intervalle qui dure environ 30 à 60 ms, le noyau 2b poursuit donc son déplacement jusqu'à fermeture du contacteur, sans brutalité et sans vitesse excessive. Durant ce premier intervalle de la deuxième phase on obtient dans le cas général axialement un contact de butée entre le pignon 1 et la couronne de démarrage entre les temps t1 et t2.

Plus précisément, le circuit de commande 3000 comporte un micro-contrôleur 100 qui est relié par une de ses entrées (non représentée) à un capteur de température placé à l'intérieur du contacteur au voisinage du bobinage 2a et est relié également par une seconde entrée aux bornes d'alimentation du démarreur.

Le micro-contrôleur 100 est relié par une de ses sorties X1 au transistor T1 et donc via ce transistor à la bobine B présentant le bobinage 2a. Ce micro-contrôleur prélève sur deux entrées des signaux représentatifs de la température du contacteur donc de la bobine 2a et d'autre part, de la tension d'alimentation U en entrée du démarreur.

La tension d'alimentation du démarreur est variable en fonction de l'état de charge de la batterie du véhicule et de la température. En effet, la température de la bobine B conditionne directement sa résistance. Or, le courant moyen obtenu pour un rapport cyclique donné, dépend directement de la tension disponible aux bornes du démarreur - donc aux bornes de la batterie - et de la résistance de la bobine B.

Ainsi, le micro-contrôleur 100, comporte une mémoire dans laquelle est enregistrée une table numérique faisant correspondre pour une intensité efficace souhaitée, le rapport cyclique R2 à adopter en fonction de la tension d'alimentation du démarreur et de la température de la bobine. En pratique, R2 est de l'ordre de 0,4 à 0,6 à une température de 20°.

L'intensité efficace est sensiblement constante dans ce premier intervalle.

Ainsi, le micro-contrôleur 100 adopte automatiquement un rapport cyclique R2 en fonction de la tension d'alimentation aux bornes du démarreur et de la résistance du bobinage (elle-même dépendant de la température). Les mesures de la tension U et de la température T sont réalisées avantageusement avant mise en oeuvre de la première phase décrite précédemment, au moment de l'activation du démarreur.

Dans un second intervalle de la seconde phase, qui s'écoule entre l'instant t₂ et l'instant t₃, et suivant l'invention après un temps prédéterminé ou en variante déterminé, le micro-contrôleur 100 met en oeuvre une augmentation continue et progressive du rapport cyclique, allant du rapport R2 pour retrouver le rapport R1 ou en variante un rapport supérieur à R1. Cet intervalle présente une durée d'environ 20 à 50 ms et permet d'assurer, par l'accroissement progressif de l'intensité efficace, la fermeture du contacteur, dans un cas accidentel où le contacteur n'aurait pas pu être fermé entre t1 et t2. Un tel cas accidentel peut se produire notamment si des forces de frottement anormalement élevées prennent place dans le contacteur, dans les moyens mécaniques 4 et au niveau de l'arbre du moteur M. Ces forces anormales sont dues par exemple à des phénomènes climatiques, de dilatation, de grippage, à la présence d'impuretés de saletés et de toutes autres souillures notamment au niveau des cannelures de l'arbre de moteur électrique et des articulations de la fourchette.

Durant ce deuxième intervalle on comprime le ressort dents contre dents 5 pour permettre au noyau plongeur 2b de venir actionner le contact mobile 3 pour alimenter le moteur électrique et effectuer une rotation de son arbre afin d'assurer une pénétration du pignon dans la couronne et donc un engrènement du pignon avec la couronne.

Bien entendu dans le cas où le contact mobile est fermé entre les temps t1 et t2, pignon engrenant avec la couronne 3, il n'y a pas lieu de réaliser l'accroissement continu de l'intensité car l'engrènement est réalisé avant un temps prédéterminé selon les applications. Dans 90% des cas le contact mobile est fermé avant ce temps prédéterminé le plus court possible pour englober les fonctionnements normaux.

En variante ce temps est déterminé par exemple en fonction de la tension de la batterie ou de la température du bobinage 2a, ces grandeurs étant influencées par la non fermeture du contact mobile engendrant des valeurs anormales.

Dans tous les cas dans un intervalle supplémentaire s'écoulant à la figure 3 entre l'instant t3 et un instant t4, le rapport cyclique est maintenu à R1 ou à une valeur supérieure à R1 pendant environ 5 à 30 ms. Cette phase à rapport cyclique élevé débute à la fermeture du contact mobile 3 et maintient le noyau 2b dans sa position de contactage (contact mobile 3 fermé) avec une force d'attraction élevée qui évite des rebonds du noyau mobile 2b contre une butée formée habituellement par un autre noyau, fixe celui-là. Ce troisième intervalle t3, t4 dure suffisamment longtemps pour pouvoir absorber les pointes de courant dues au démarrage du moteur thermique par le moteur électrique M, qui selon une caractéristique de l'invention est non piloté.

Suivant une caractéristique ce n'est donc qu'après mise en butée de la couronne avec le pignon qu'est réalisée l'augmentation du rapport cyclique.

Après le troisième intervalle on adopte dans une troisième phase un rapport cyclique R3 aux bornes de la résistance du bobinage 2a pour maintenir le contact mobile en position de fermeture.

Le courant efficace est plus faible dans cette troisième phase que dans les deux autres phases.

Ainsi qu'on l'aura compris et qu'il ressort de la description, un seul bobinage 2a est nécessaire et le micro-contrôleur peut être monté avantageusement sur un support, tel qu'une carte, dans le démarreur, plus précisément être monté au voisinage du bobinage 2a dans l'espace délimité par le capot (non référencé à la figure 1) portant les contacts fixes comme décrit par exemple dans le document FR99 09977 déposé le 30 juillet 1999.

Grâce à la modulation de largeur d'impulsion durant la première phase, plus précisément au début de celle-ci, on peut effectuer une mesure de courant et donc de la tension de la batterie sachant que, de manière précitée, le courant moyen obtenu pour un rapport cyclique donné dépend directement de la tension disponible aux bornes de la batterie.

A l'aide de la table numérique enregistrée dans le micro-calculateur 100 on adopte, après le départ du premier intervalle de la première phase, le rapport cyclique souhaité.

Bien entendu à la figure 3 on peut diminuer l'intensité du courant efficace dans la première phase. Tout dépend du déplacement du noyau plongeur que l'on souhaite avoir. On peut se rapprocher le plus possible de la limite de décollement du noyau et mieux contrôler le déplacement de celui-ci en jouant notamment sur la durée de la première phase, car on est obligé de prévoir un coefficient de sécurité plus important pour être sûr que le noyau décolle.

Le décollement du noyau est moins brutal et est mieux contrôlé, le premier intervalle de la deuxième phase se produisant à intensité efficace sensiblement constante.

Ainsi qu'on l'aura compris en disposant le micro-contrôleur 100 sur une carte de manière précitée au voisinage du bobinage 2a on peut mesurer la température de celui-ci en montant sur la carte une résistance reliée au micro-contrôleur et variable en fonction de la température par exemple à coefficient de température positive ou négative.

Toutes les autres dispositions décrites dans le document FR00 08293 précité sont envisageables.

Le dispositif de commande de l'alimentation du moteur électrique du démarreur selon l'invention comporte un premier dispositif électronique 1000 relié par une liaison filaire 2000 à un deuxième dispositif électronique 3000.

Ce deuxième dispositif 3000 comporte le micro-contrôleur 100, la bobine B et le transistor T1, ici un transistor de puissance par exemple du type MOSFET.

Le premier dispositif est destiné à réveiller le deuxième dispositif lorsque l'interrupteur commande 21 décrit ci-après est fermé.

Ce deuxième dispositif se loge avantageusement dans le contacteur dans l'espace délimité par le capot et le bobinage 2a. Ici le deuxième dispositif est implanté entre le noyau fixe (non référencé à la figure 1) et le contact mobile 3. Pour ce faire, on peut prévoir comme décrit dans le document FR99 09977 une cloison d'étanchéité qui sépare à l'intérieur du capot, dit aussi bloc de support, qui sépare un compartiment avant dans lequel sont agencés les plots, dits aussi bornes de contact, et le contact mobile 3, d'un compartiment arrière dans lequel est agencé le deuxième dispositif électronique 3000. Pour plus de précisions on se reportera à ce document.

Bien entendu, ce deuxième dispositif 3000 peut se trouver à dans un boitier électronique placé à l'extérieur du contacteur. Dans ce cas, un capteur de température localisé à proximité des partie chaudes du contacteur sera relié à ce boîtier électronique séparé.

Le premier dispositif électronique 1000 est ici placé à l'extérieur du contacteur.

Suivant l'invention la liaison filaire 2000 est bi-directionnelle et est placée entre le premier et deuxième dispositif électronique.

Ce premier dispositif électronique 1000 comporte un contrôleur ou d'une manière générale une unité électronique de commande et de contrôle.

Ce premier dispositif 1000, par exemple le calculateur de contrôle du moteur thermique du véhicule, comporte un contrôleur 22 relié à un driver 23 qui commande un transistor 123. Ce transistor 123, par exemple de type Mosfet est relié à la liaison filaire 2000 au travers d'une résistance R1.

Cette liaison filaire 2000 est reliée entre la résistance R1 et un pont diviseur 24 constitué par deux résistances R2 et R3.

Le driver 23, le transistor 123 et le contrôleur ou calculateur 22 présentent chacun une porte reliée à la borne B+ d'alimentation à la tension de la batterie.

Le calculateur 22 comporte intérieurement un comparateur 122 et comporte des portes reliées respectivement à un dispositif d'avertissement 20, à un interrupteur de commande 21 et au circuit 24. Un condensateur C1 de filtrage est placé entre la masse et la liaison filaire 2000. Ce comparateur 122 est référencé selon deux tensions V3 et V5.

Le circuit 24 permet d'informer le dispositif 22, par son comparateur 122, de l'état de la liaison filaire 2000 pour activer ou non le dispositif d'avertissement 20 selon que cette liaison filaire 2000 soit respectivement à un état logique haut ou bas.

L'interrupteur 21 et un dispositif d'avertissement 20 sont reliés également en parallèle à la borne B+, c'est-à-dire l'alimentation à la tension de la batterie.

L'interrupteur de commande 21 est ici l'interrupteur de commande de la clé de contact antivol du véhicule. En variante il s'agit d'un relais actionné par la clé de contact ou une carte électronique de contact.

En variante il s'agit d'un relais actionné par le calculateur 22 dit aussi module de contrôle moteur.

Le dispositif d'avertissement 20 consiste ici en une lampe implantée sur le tableau de bord du véhicule. En variante il s'agit d'un afficheur implanté au tableau de bord ou de tout autre dispositif de signalisation.

Ici on tire parti du premier dispositif 1000 qui comporte des moyens d'avertissement. Ce dispositif 1000 effectue d'autres opérations pour le contrôle du moteur thermique.

Le premier dispositif 1000 et le deuxième dispositif 3000 sont reliés à la masse.

Le deuxième dispositif 3000 comporte également un dispositif électronique 31 d'information de protection thermique, dit dispositif d'information, un dispositif de signal de commande 32, et un dispositif de maintien de la protection thermique 33, dit dispositif de maintien.

Le micro-contrôleur 100 présente deux portes P'3, P'1 reliées respectivement au dispositif d'information 31, et au dispositif de signal de commande 32. Une autre porte du micro-contrôleur 100 est reliée au transistor T1 relié à la bobine B et à la masse, une diode de roue libre (non référencée), étant branchée entre les bornes de la bobine B reliée à la borne B+. Le micro-contrôleur 100 présente également un dispositif de protection, dit dispositif de protection thermique, permettant d'envoyer une information au dispositif d'information 31.

Par exemple lorsque le moteur M du démarreur a tourné durant une durée déterminée par avance, le micro-contrôleur 100 envoie via sa porte P'3 concernée une information au dispositif d'information de protection 31 qui rend alors conducteur un transistor 34 relié à une porte de sortie du dispositif 31. Ce transistor 34 est relié à la liaison filaire 2000, ici via une résistance 35.

Le dispositif de signal de commande 32 est relié également à la résistance 35 ainsi que le dispositif de maintien 33. Le dispositif de maintien 33 est relié par l'une de ses portes à la liaison filaire 2000 et par une autre de ses portes à une entrée P2 du dispositif de signal de commande 32.

Le dispositif de maintien 33 est relié par sa porte P3 à la porte P3 du dispositif d'information de protection 31 en étant piloté par exemple à la température du démarreur.

Les portes P3 sont reliées à la porte P'3, dite porte de protection thermique, du micro-contrôleur.

De manière précitée le dispositif de signal de commande 32 est relié, ici via sa porte P1, à la porte P'1, dite de réveil du micro-contrôleur. Les dispositifs 31 et 32 sont reliés entre eux via leur porte P4.

Ces dispositifs 31,32 comportent ici chacun un comparateur, dont une entrée est reliée à l'entrée de l'autre comparateur. Les sorties de ces comparateurs sont reliées respectivement au transistor 34 et à la résistance 35.

Ainsi lorsque l'on ferme l'interrupteur de commande 21, par exemple à l'aide de la clé de contact le premier dispositif 1000 envoie une information via la liaison filaire 2000 au deuxième dispositif 3000, le transistor 123 étant passant, provoquant ainsi le réveil du microcontrôleur 100 puis la phase de commande de la bobine 2a.

Le potentiel de la liaison filaire varie alors entre 12V et 24V.

Pendant cette phase de réveil et de commande de l'interrupteur K via la bobine 2a, le transistor 34 demeure ouvert.

Lorsque le moteur électrique du démarreur M a tourné pendant la durée déterminée précitée, le dispositif de protection intervient en sorte que le micro-contrôleur coupe l'alimentation du moteur électrique en ouvrant le transistor T1 et envoie une information de protection thermique au dispositif d'information de protection 31, qui alors inhibe le signal d'entrée du dispositif de commande 32 en activant le transistor 34 en sorte que la liaison filaire tombe en dessous de 12V en étant par exemple de 3 ou 4V. Cette tension dépend des résistances visibles à la figure 4. Le comparateur 122 du calculateur 22 envoie alors par sa sortie une information au dispositif d'avertissement 20 pour activer celui-ci.

Le comparateur du dispositif d'information comporte une entrée avec au moins un seuil. Cette entrée est destinée à être modifiée par le dispositif de protection thermique.

Le conducteur est alors averti, la lampe témoin s'allumant.

La liaison filaire 2000 est ainsi bi-directionnelle et laisse donc passer un courant électrique, d'une part, dans un sens pour alimenter la bobine via le dispositif 32 et le micro-contrôleur 100 et, d'autre part, dans l'autre sens pour alimenter le dispositif d'avertissement via le circuit 24 et le calculateur 22 lorsque le dispositif de protection thermique et le dispositif d'information 31 sont activés. Ceci se produit par exemple après plusieurs démarrages et redémarrages infructueux du moteur thermique du véhicule automobile et/ou lorsque le moteur électrique M a tourné pendant une durée prédéterminée. Le dispositif de protection intégré au micro-contrôleur 100 est donc sensible à cette durée et à la température. En variante il est sensible à la tension de la batterie. La solution est simple et économique.

Le conducteur normalement arrête d'activer le démarreur lorsque la lampe reste allumée.

Néanmoins celle-ci continue à rester allumée grâce au dispositif de maintien 33 qui impose une tension sur la liaison unifilaire 2000 pour maintenir actif le dispositif d'avertissement 20 alors que l'interrupteur 21 est ouvert.

Lorsque la température du moteur électrique du démarreur a baissé, le micro-contrôleur 100, du fait qu'il reçoit une information sur la température du bobinage 2a et donc du moteur électrique M, désactive le signal d'information de protection thermique au dispositif 33. Les dispositifs 31,33 sont alors désactivés en sorte que le dispositif 20 s'éteint.

Le conducteur peut alors démarrer à nouveau le démarreur.

Bien entendu la durée déterminée du dispositif de protection thermique est supérieure au temps déterminé ou prédéterminé précité.

Ainsi qu'on l'aura compris le dispositif d'information de protection 31 permet, lorsqu'il est activé par le dispositif de protection intégré au micro-contrôleur 100, d'abaisser la tension du dispositif de commande afin que le calculateur 22 active le dispositif d'avertissement 20. Normalement la tension du dispositif de signal de commande est plus élevée et le transistor 123 est passant lorsque l'interrupteur de commande est fermé.

Selon l'invention le dispositif de commande de l'alimentation du démarreur comporte un premier 1000 et un second dispositif 3000 électronique reliés entre eux par une liaison filaire biunivoque, le deuxième dispositif électronique pilotant l'alimentation de la bobine B de commande du moteur électrique du démarreur lorsque l'interrupteur 21 est fermé et comportant un dispositif d'information de protection thermique 31 permettant d'abaisser, lorsqu'il est activé, la tension du dispositif de commande pour activer un dispositif d'avertissement via un calculateur électronique que comporte le premier dispositif électronique.

Le courant électrique qui circule dans les deux sens dans la liaison filaire est ici du type analogique ou en variante logique.

Bien entendu le premier dispositif électronique peut être distinct du module du contrôle moteur du véhicule automobile.

Ce premier dispositif électronique peut être implanté à côté du deuxième dispositif électronique dans le contacteur du démarreur.

En résumé le premier dispositif électronique 1000 reçoit et génère de nombreuses informations, notamment concernant la vitesse du véhicule automobile ainsi que l'état de la clé de contact 21. Ce premier dispositif, lorsque l'interrupteur de commande 21 est fermé, réveille via la liaison filaire 2000, grâce à la femeture de l'interrupteur 123, le deuxième dispositif électronique comportant un dispositif de signal de commande 32 réceptionnant l'ordre de démarrage émis par le premier dispositif et mettant en forme un signal de commande pour le micro-contrôleur 100 pour activer le démarreur.

Lorsque le dispositif de protection intervient, le dispositif d'information de protection 31 inhibe le dispositif 32 et génère une tension permettant d'activer le ou les dispositifs d'avertissement, que comporte le premier dispositif électronique.

Lorsque l'interrupteur de commande est ouvert, le dispositif de protection du démarreur étant activé, le dispositif de maintien intervient pour générer une tension permettant d'activer le ou les dispositifs d'avertissement.

Bien évidemment, le dispositif électronique 1000 n'est pas limité au boîtier électronique de contrôle moteur. Il peut s'agir de tout autre boîtier électronique présent dans le véhicule automobile tel que par exemple un calculateur d'embrayage, un calculateur de sécurisation du véhicule ...

## Revendications

1. Dispositif de commande de l'alimentation d'un moteur électrique (M) d'un démarreur, notamment de véhicule automobile, comportant un contact de puissance (K) qui commande l'alimentation du moteur électrique (M) du démarreur, un circuit de commande (100) pour la commande du contact puissance (K), ainsi qu'un interrupteur de commande (21) entre le circuit de commande (100) et une alimentation (B+) à la tension de la batterie, **caractérisé en ce qu'**il comporte un premier dispositif électronique (1000) relié, d'une part, à l'interrupteur de commande (21) et, d'autre part, par une liaison filaire (2000) à un deuxième dispositif électronique (3000) comprenant le circuit de commande (100), **en ce qu'**un dispositif d'avertissement (20) est monté entre l'alimentation (B+) à la tension de la batterie et le premier dispositif électronique (1000), et **en ce que** le deuxième dispositif électronique (3000) comporte au moins deux dispositifs (31,32) reliés au circuit de commande (100) à savoir, d'une part, un dispositif d'information de protection (31) activé par un dispositif de protection du démarreur que comporte le circuit de commande (100) et, d'autre part, un dispositif de signal commande (32), en sorte que le dispositif d'information de protection (31) est propre à commander par la liaison filaire (2000) le premier dispositif électronique pour activer, via ce premier dispositif électronique (1000), le dispositif d'avertissement (20) lorsque le dispositif de protection est actif, tandis que le dispositif de signal de commande (32) est propre à activer le circuit de commande (100) lorsque le dispositif de protection est inactif.

2. Dispositif selon la revendication 1, **caractérisé en ce que** les dispositifs de signal de commande (32) et d'information de protection (31) sont reliés entre eux en sorte que le dispositif d'information de protection (31), lorsqu'il est actif, est propre à inhiber le dispositif de signal de commande (32).

3. Dispositif selon la revendication 1 ou 2, **caractérisé en ce que** le dispositif d'avertissement (20) et l'interrupteur de commande (21) sont montés en parallèle entre la ligne d'alimentation (B+) à la batterie et le premier dispositif électronique (1000).

4. Dispositif selon la revendication 3, **caractérisé en ce que** le deuxième dispositif électronique (3000) est doté d'un dispositif de maintien de l'information (33) pour maintenir en action le dispositif d'avertissement (20) lorsque l'interrupteur de commande (21) est ouvert et ce tant que le démarreur ne retrouve pas ses conditions normales de fonctionnement avec mise hors service du dispositif de protection du démarreur.

5. Dispositif selon la revendication 4, **caractérisé en ce que** le dispositif de maintien de l'information (33) est relié au circuit de commande (100) dans lequel est intégré le dispositif de protection du démarreur.

6. Dispositif selon la revendication 5, **caractérisé en ce que** le dispositif de protection du démarreur est sensible à la température du démarreur et à une durée déterminée ou prédéterminée de la rotation du moteur électrique (M) du démarreur.

7. Dispositif selon l'une quelconque des revendications précédentes, **caractérisé en ce que** le premier dispositif électronique appartient au module de contrôle du moteur thermique du véhicule automobile.

## Patentansprüche

1. Vorrichtung zur Steuerung der Stromversorgung eines Elektromotors (M) eines Anlassers, insbesondere für Kraftfahrzeuge, umfassend einen Leistungskontakt (K), der die Stromversorgung des Elektromotors (M) des Anlassers steuert, eine Steuerschaltung (100) zur Steuerung des Leistungskontakts (K), sowie einen Steuerschalter (21) zwischen der Steuerschaltung (100) und einer Stromversorgung (B+) zum Anschluß an die Batteriespannung, **dadurch gekennzeichnet, daß** sie eine erste elektronische Vorrichtung (1000) umfaßt, die einerseits mit dem Steuerschalter (21) und andererseits über eine Drahtleitung (2000) mit einer die Steuerschaltung (100) umfassenden zweiten elektronischen Vorrichtung (3000) verbunden ist, daß eine Warnvorrichtung (20) zwischen der Stromversorgung (B+) zum Anschluß an die Batteriespannung und der ersten elektronischen Vorrichtung (1000) geschaltet ist, und daß die zweite elektronische Vorrichtung (3000) wenigstens zwei mit der Steuerschaltung (100) verbundene Vorrichtungen (31, 32) umfaßt, und zwar einerseits eine Schutzinformationsvorrichtung (31), die durch eine Schutzvorrichtung des Anlassers aktiviert wird, welche die Steuerschaltung (100) umfaßt, und andererseits eine Steuersignalvorrichtung (32), so daß die Schutzinformationsvorrichtung (31) in der Lage ist, durch die Drahtleitung (2000) die erste elektronische Vorrichtung zu aktivieren, um über diese erste elektronische Vorrichtung (1000) die Warnvorrichtung (20) zu aktivieren, wenn die Schutzvorrichtung aktiv ist, während die Steuersignalvorrichtung (32) in der Lage ist, die Steuerschaltung (100) zu aktivieren, wenn die Schutzvorrichtung inaktiv ist.

2. Vorrichtung nach Anspruch 1, **dadurch gekennzeichnet, daß** die Steuersignal- (32) und Schutzinformationsvorrichtungen (31) miteinander verbunden sind, so daß die Schutzinformationsvorrichtung (31), wenn sie aktiv ist, die Steuersignalvorrichtung (32) sperren kann.

3. Vorrichtung nach Anspruch 1 oder 2, **dadurch gekennzeichnet, daß** die Warnvorrichtung (20) und der Steuerschalter (21) zwischen der Stromversorgungsleitung (B+) zum Anschluß an die Batterie und der ersten elektronischen Vorrichtung (1000) parallel geschaltet sind.

4. Vorrichtung nach Anspruch 3, **dadurch gekennzeichnet, daß** die zweite elektronische Vorrichtung (3000) mit einer Informationshaltevorrichtung (33) versehen ist, um die Warnvorrichtung (20) aktiv zu halten, wenn der Steuerschalter (21) geöffnet ist, und zwar solange der Anlasser bei Abschaltung der Schutzvorrichtung des Anlassers nicht zu seinen normalen Betriebsbedingungen zurückgekehrt ist.

5. Vorrichtung nach Anspruch 4, **dadurch gekennzeichnet, daß** die Informationshaltevorrichtung (33) mit der Steuerschaltung (100) verbunden ist, in welche die Schutzvorrichtung des Anlassers integriert ist.

6. Vorrichtung nach Anspruch 5, **dadurch gekennzeichnet, daß** die Schutzvorrichtung des Anlassers für die Temperatur des Anlassers und für eine bestimmte oder vorbestimmte Dauer der Drehung des Elektromotors (M) des Anlassers empfindlich ist.

7. Vorrichtung nach einem der vorangehenden Ansprüche, **dadurch gekennzeichnet, daß** die erste elektronische Vorrichtung zum Kontrollmodul für den Verbrennungsmotor des Kraftfahrzeugs gehört.

## Claims

1. Apparatus for controlling the power supply to an electric motor (M) of a starter, especially for a motor vehicle, comprising a power contact (K) which controls the power supply of the electric motor (M) of the starter, a control circuit (100) for controlling the power contact (K), and a control interrupter (21) between the control circuit (100) and a supply (B+) at the voltage of the battery, **characterised in that** it includes a first electronic device (1000) which is connected, firstly, to the control interrupter (21), and secondly, through a wire connection (2000), to a second electronic device (3000) which includes the control circuit (100), **in that** a warning device (20) is connected between the supply (B+) at the battery voltage and the first electronic device (1000), and **in that** the second electronic device (3000) comprises at least two means (31, 32) which are connected to the control circuit (100), namely, firstly, a protection information means (31) which is activated by a protection device of the starter included in the control circuit (100), and secondly, a control signal means (32), such that the protection information means (31) is adapted to control the first electronic device through the wire connection (2000), so as to activate the warning device (20), via the said first electronic device (1000), when the protection means is active, while the control signal means (32) is adapted to activate the control circuit (100) when the protection means is inactive.

2. Apparatus according to Claim 1, **characterised in that** the control signal means (32) and the protection information means (31) are connected together in such a way that the protection information means (31), when active, is adapted to inhibit the control signal means (32).

3. Apparatus according to Claim 1 or Claim 2, **characterised in that** the warning device (20) and the control interrupter (21) are connected in parallel between the power supply line (B+) to the battery and the first electronic device (1000).

4. Apparatus according to Claim 3, **characterised in that** the second electronic device (3000) has an information holding means (33) for maintaining the warning device (20) in action when the control interrupter (21) is open, and so long as the starter does not revert to its normal operating conditions with the starter protection means being put out of service.

5. Apparatus according to Claim 4, **characterised in that** the information holding means (33) is connected to the control circuit (100), in which the protection means of the starter is incorporated.

6. Apparatus according to Claim 5, **characterised in that** the protection means of the starter is responsive to the temperature of the starter and to a determined or predetermined period of the rotation of the electric motor (M) of the starter.

7. Apparatus according to any one of the preceding Claims, **characterised in that** the first electronic device is part of the control module for the engine of the motor vehicle.
